# EUROPÄISCHE PATENTSCHRIFT

(11) **EP 2 205 404 B1**
(45) Veröffentlichungstag und Bekanntmachung des Hinweises auf die Patenterteilung: **25.04.2012**
(21) Anmeldenummer: 08802969.9
(22) Anmeldetag: 07.08.2008
(51) Int. Cl.: B25F 5/00, B25F 5/02, B25D 17/04, F16F 7/01, F16F 9/00, F16F 9/02, F16F 9/43

(54) **ZUSATZHANDGRIFFVORRICHTUNG**
AUXILIARY HANDLE DEVICE
SYSTÈME DE POIGNÉE SUPPLÉMENTAIRE

(30) Priorität: 26.09.2007 DE 102007046091
(43) Veröffentlichungstag der Anmeldung: 14.07.2010
(73) Patentinhaber: Robert Bosch GmbH, 70442 Stuttgart (DE)
(72) Erfinder: EICHER, Roswitha, 70794 Filderstadt (DE); HEESS, Stefan, 70771 Leinfelden-Echterdingen (DE); MAUTE, Joerg, 71069 Sindelfingen (DE); ESENWEIN, Florian, 73066 Uhingen-Holzhausen (DE); EICHER, Bernhard, 70794 Filderstadt (DE); SCHULLER, Marcus, 72135 Dettenhausen (DE)
(86) Internationale Anmeldenummer: PCT/EP2008/060373
(87) Internationale Veröffentlichungsnummer: WO 2009/043626

(56) Entgegenhaltungen:
- EP-A- 0 156 387
- WO-A-02/38341
- DE-A1- 2 344 263
- DE-U1-202006 019 885
- US-A- 4 217 677
- US-A- 5 355 552

## Beschreibung

### Stand der Technik

Die Erfindung geht aus von einer Zusatzhandgriffvorrichtung nach dem Oberbegriff des Anspruchs 1.

Es ist bereits eine Handgriffvorrichtung für eine Handwerkzeugmaschine bekannt, die einen Handgriff und eine Einstellvorrichtung mit einem Ventil aufweist. Eine gattungsgemäß Vorrichtung ist aus WO 02/38341 A bekannt.

### Vorteile der Erfindung

Die Erfindung geht aus von einer Handgriffvorrichtung, insbesondere eine Zusatzhandgriffvorrichtung, insbesondere für eine Handwerkzeugmaschine, mit einem Handgriff und einer Einstellvorrichtung, die ein Ventil umfasst.

Es wird vorgeschlagen, dass die Einstellvorrichtung eine Einstelleinheit aufweist, die zumindest teilweise zu einer Evakuierung vorgesehen ist. In diesem Zusammenhang soll unter einem "Handgriff" ein Bereich und/oder ein Bauteil und/oder ein Element verstanden werden, der bzw. das zu einem Anlegen, insbesondere einem Umgreifen, durch eine Hand oder mehrere Hände eines Bedieners, zwecks einer Führung einer Handwerkzeugmaschine mittels der Handgriffvorrichtung, vorgesehen ist. Vorzugsweise ist der Handgriff als Zusatzhandgriff ausgebildet, so dass dieser insbesondere neben einem weiteren Handgriff, insbesondere dem Haupthandgriff, zusätzlich an der Handwerkzeugmaschine anbringbar ist, wobei die Zusatzhandgriffvorrichtung seitlich an der Handwerkzeugmaschine angeordnet ist und/oder werkzeuglos von einem Bediener an der Handwerkzeugmaschine montiert bzw. demontiert werden kann und/oder in einem vorderen, werkzeugnahen Bereich der Handwerkzeugmaschine angeordnet ist und/oder der Zusatzhandgriff stabförmig ausgebildet ist. Unter "vorgesehen" soll insbesondere speziell ausgestattet und/oder ausgelegt verstanden werden. Ferner soll unter einer "Evakuierung" insbesondere ein Vorgang verstanden werden, der zumindest zu einer Erzeugung eines Unterdrucks innerhalb eines vorzugsweise geschlossenen Volumens vorgesehen ist, wobei der Unterdruck geringer ist als ein Atmosphärendruck außerhalb des Volumens. Durch die erfindungsgemäße Ausgestaltung kann eine vorteilhafte Einstellung einer Handgriffeigenschaft, wie beispielsweise eine Griffform, insbesondere eine Anpassung einer Kontur eines Griffbereichs an eine Hand eines Bedieners, und/oder eine Dämpfungseigenschaft des Handgriffs und/oder weitere, dem Fachmann als sinnvoll erscheinende Handgriffeigenschaften erreicht und damit ein hoher Bedienkomfort für den Bediener erzielt werden. Vorzugsweise ist die Evakuierung von einem reversiblen Prozess gebildet, so dass eine vorteilhafte Anpassung der Handgriffeigenschaft an unterschiedliche Arbeitssituationen erzielt werden kann. Die erfindungsgemäße Handgriffvorrichtung, insbesondere die Zusatzhandgriffvorrichtung ist grundsätzlich in Verbindung mit allen, dem Fachmann als sinnvoll erscheinenden Handwerkzeugmaschinen einsetzbar, bei denen insbesondere eine Führung von Handwerkzeugmaschinen mittels des Zusatzhandgriffs für einen Bediener erleichtert wird. Besonders vorteilhaft ist die Handgriffvorrichtung, insbesondere Zusatzhandgriffvorrichtung, in Verbindung mit einer Winkelschleifmaschine.

Zudem kann eine vorteilhafte Dämpfung von Schwingungen und/oder Vibrationen, die im Betrieb der Handwerkzeugmaschine auf die Handgriffvorrichtung übertragen werden, erzielt werden, wenn die Einstellvorrichtung eine Dämpfungseinheit aufweist. Vorzugsweise kann mittels der Einstellvorrichtung vorteilhaft ein Dämpfungsparameter an eine Anwendungssituation im Betrieb der Handwerkzeugmaschine angepasst werden.

Die Einstelleinheit weist zumindest einen Aufnahmebereich auf, der zu einer Evakuierung durch Entzug zumindest eines Dämpfungsmittels vorgesehen ist. Hierdurch kann vorteilhaft ein Dämpfungsparameter der Dämpfungseinheit an eine Anwendungssituation im Betrieb der Handwerkzeugmaschine angepasst werden und/oder es kann eine Kontur und/oder eine Griffform des Handgriffs variiert werden. Die Einstelleinheit ist zumindest teilweise von der Dämpfungseinheit gebildet.

Des Weiteren wird vorgeschlagen, dass die Handgriffvorrichtung zumindest ein Dämpfungsmittel aufweist, das aus zumindest zwei zueinander bewegbaren Mitteln gebildet ist, wodurch eine vorteilhafte Dämpfung durch einen Austausch von Schwingungsenergie in Form einer Bewegungsenergie und/oder durch Erzeugung einer Reibung zwischen den einzelnen, zueinander bewegbaren Mitteln erzielt werden kann. Sind zudem die zueinander bewegbaren Mittel des Dämpfungsmittels innerhalb der zur Evakuierung vorgesehen Einstelleinheit angeordnet, kann vorteilhaft ein Abstand zwischen den Mitteln durch Evakuierung verändert, insbesondere verkleinert, werden und damit ein Dämpfungsparameter variiert werden.

Es wird weiterhin vorgeschlagen, dass die Handgriffvorrichtung zumindest ein Dämpfungsmittel aufweist, das von einem Schaumstoff gebildet ist, wodurch eine konstruktiv einfache Schwingungsdämpfung mittels des Schaumstoffs und eine insbesondere leichte Handgriffvorrichtung erzielt werden kann. In diesem Zusammenhang soll unter einem "Schaumstoff" insbesondere ein Kunststoff verstanden werden, dessen Struktur durch viele Zellen, insbesondere von Grundmaterial eingeschlossene Hohlräume bzw. Poren, gebildet wird, wobei in den Hohlräumen bzw. Poren ein Gas angeordnet ist.

Ferner wird vorgeschlagen, dass das Dämpfungsmittel von einem Fluid gebildet ist, wodurch eine konstruktiv einfache Evakuierung, insbesondere des Aufnahmebereichs, erzielt werden kann. In diesem Zusammenhang soll unter einem "Fluid" insbesondere ein Stoff, vorzugsweise ein Gas und/oder eine Flüssigkeit und/oder ein Gel, verstanden werden, der eine Fließeigenschaft aufweist. Zudem kann mittels des Fluids eine vorteilhafte Lagerung des von Schaumstoff gebildeten Dämpfungsmittels erzielt werden.

Ferner wird vorgeschlagen, dass das Dämpfungsmittel von einem Gas gebildet ist, wodurch eine insbesondere Gewicht sparende Bauweise der Zusatzhandgriffvorrichtung konstruktiv einfach erzielt werden und zudem mittels des Gases eine vorteilhafte Schwingungsdämpfung im Betrieb der Handgriffvorrichtung erzielt werden. Unter einem "Gas" soll dabei ein reines Gas aus nur einer Gaskomponente bestehend oder ein Gasgemisch aus zumindest zwei Gaskomponenten bestehend verstanden werden.

Zudem wird vorgeschlagen, dass das erste Dämpfungsmittel von Luft gebildet ist, wodurch die Handgriffvorrichtung besonders kostengünstig gebaut werden kann.

Des Weiteren wird vorgeschlagen, dass die Einstellvorrichtung zumindest eine Pumpe aufweist, die zu einem Ansaugen und/oder einem Absaugen eines Dämpfungsmittels vorgesehen ist, wodurch eine Einstellung eines Handgriffparameters, insbesondere ein Dämpfungsparameter und/oder eine Anpassung einer Kontur eines Griffbereichs an eine Hand des Bedieners bzw. an unterschiedliche Hände verschiedener Bediener, unabhängig von einer externen Pumpe, wie beispielsweise eine in der Handwerkzeugmaschine integrierte Pumpe, und/oder der Handwerkzeugmaschine erfolgen kann. Vorzugsweise ist das Dämpfungsmittel von einer Flüssigkeit und besonders vorteilhaft von einem Gas gebildet. Des Weiteren ist es auch denkbar, dass die Einstellvorrichtung ein Steuerelement aufweist, das zu einer Steuerung, insbesondere einer automatischen Steuerung, einer Zufuhr und/oder einer Abfuhr eines Dämpfungsmittels vorgesehen ist.

Weiterhin wird vorgeschlagen, dass der Zusatzhandgriff eine Griffhülse aufweist, die zumindest teilweise einen Aufnahmebereich für die Einstellvorrichtung bildet, wodurch eine konstruktiv einfache Aufnahme und eine kompakte, insbesondere Platz sparende Anordnung der Einstellvorrichtung innerhalb der Handgriffvorrichtung erreicht werden kann.

Des Weiteren wird vorgeschlagen, dass die Griffhülse zumindest teilweise aus einem elastischen und/oder flexiblen Material gebildet ist, wodurch eine vorteilhafte Dehnbarkeit der Griffhülse während einer Evakuierung erzielt werden kann. Vorzugsweise ist die Griffhülse aus einem gummiartigen Material gebildet.

Ist die Griffhülse zudem aus einem transparenten Material gebildet, kann ein vorteilhafter Designeffekt für einen Bediener erzielt werden, insbesondere wenn eines der beiden Dämpfungsmittel farbig ausgebildet ist, wie beispielsweise ein farbiges Gel, ein Metallic-Gel usw.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen:
- Fig. 1: eine Handwerkzeugmaschine mit einer erfindungsgemäßen Zusatzhandgriffvorrichtung in einer schematischen Darstellung und
- Fig. 2: die Zusatzhandgriffvorrichtung mit einer erfindungsgemäßen Einstellvorrichtung in einer perspektivischen Schnittdarstellung.

### Beschreibung des Ausführungsbeispiels

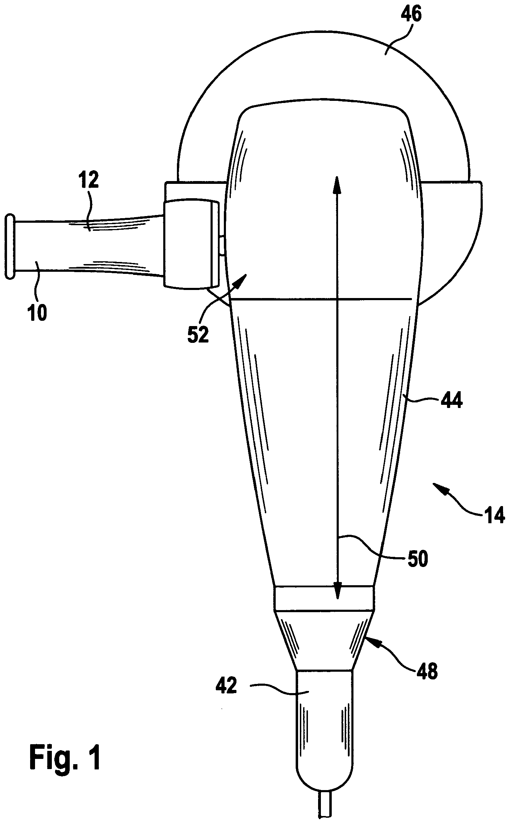

In Figur 1 ist eine von einer Winkelschleifmaschine ausgebildete Handwerkzeugmaschine 14 in einer Ansicht von oben dargestellt. Die Winkelschleifmaschine umfasst ein Gehäuse 44 und einen im Gehäuse 44 integrierten Haupthandgriff 42. Der Haupthandgriff 42 erstreckt sich an einer einem von einer Trennscheibe gebildeten Werkzeug 46 abgewandten Seite 48 in Richtung einer Längsrichtung 50 der Winkelschleifmaschine. An einem vorderen, werkzeugnahen Bereich 52 der Winkelschleifmaschine ist eine von einer Zusatzhandgriffvorrichtung 12 gebildete Handgriffvorrichtung 10 angeordnet, die sich quer zur Längsrichtung 50 der Winkelschleifmaschine erstreckt.

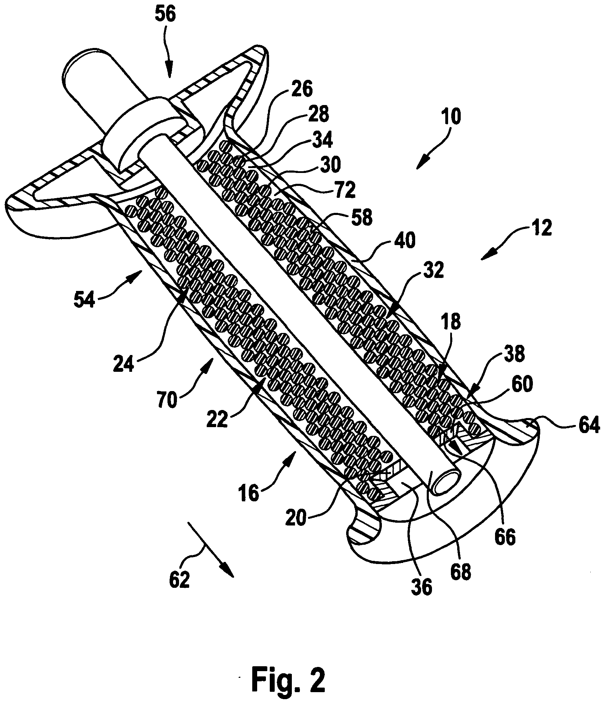

In Figur 2 ist die Zusatzhandgriffvorrichtung 12 mit einem von einem Zusatzhandgriff 54 gebildeten Handgriff 16 und einer Einstellvorrichtung 18 dargestellt. Die Einstellvorrichtung 18 umfasst ein Ventil 20, eine Einstelleinheit 22, die zu einer Evakuierung vorgesehen ist, und eine Dämpfungseinheit 24. Die Einstelleinheit 22 ist dabei von der Dämpfungseinheit 24 gebildet. Zudem weist die Zusatzhandgriffvorrichtung 12 eine Befestigungseinheit 56 zu einer Befestigung der Zusatzhandgriffvorrichtung 12 an der Handwerkzeugmaschine 14 und eine Griffhülse 40 auf. Die Griffhülse 40 bildet mit einer radial nach innen gewandten Oberfläche 58 einen Aufnahmebereich 38, in dem die Einstelleinheit 22 bzw. die Dämpfungseinheit 24, die zu einer Schwingungsdämpfung zwei Dämpfungsmittel 26, 34 umfasst, angeordnet ist. Das erste Dämpfungsmittel 26 weist eine Mehrzahl an zueinander bewegbaren, aus Schaumstoff gebildeten Mitteln 28, 30 auf. Das weitere Dämpfungsmittel 34 ist von einem gasförmigen Fluid, das von Luft 72 gebildet ist, gebildet. Grundsätzlich ist es jedoch auch denkbar, dass das weitere Dämpfungsmittel 34 von einem weiteren Gas und/oder einem weiteren Fluid, wie beispielsweise ein Gel, einer Flüssigkeit usw. gebildet ist.

Die Einstelleinheit 22 weist einen Aufnahmebereich 32 auf, der mittels der Einstellvorrichtung 18 bzw. mittels des Ventils 20 zu einer Evakuierung durch Entzug des von Luft 72 gebildeten Dämpfungsmittels 34 vorgesehen ist. Hierzu weist die Einstellvorrichtung 18 eine Pumpe 36 auf, mittels der die Luft 72 aus dem Aufnahmebereich 32 gesaugt bzw. bei Bedarf in den Aufnahmebereich 32 gepumpt werden kann. Das Ventil 20 ist als eine verschließbare Öffnung ausgebildet und in einer Wandung 60 angeordnet, die den Aufnahmebereich 32 in eine axiale Richtung 62 begrenzt. An einem der Befestigungseinheit 56 abgewandten Endbereich 64 der Griffhülse 40 ist die Wandung 60 im Wesentlichen quer zur axialen Richtung 62 an der Griffhülse 40 angeordnet. Entgegen einer Absaugrichtung bzw. Evakuierungsrichtung 66 der Luft 72 aus dem Aufnahmebereich 32 ist die Pumpe 36 der Öffnung bzw. dem Ventil 20 vorgeschaltet. In einer weiteren Ausgestaltung der Erfindung ist eine externe Absaugung bzw. Evakuierung des Aufnahmebereichs 32, wie beispielsweise durch eine externe Pumpe, jederzeit denkbar.

Um eine Anpassung des Zusatzhandgriffs 54, insbesondere einer Kontur und/oder einer Griffform des Zusatzhandgriffs 54 an eine Hand des Bedieners zu erzielen, ist die Griffhülse 40 aus einem elastischen und/oder flexiblen Material gebildet, wie beispielsweise eine von einem gummiartigen Material gebildete Griffhülse 40, so dass die Griffhülse 40 dehnbar bzw. zusammenziehbar während einer Evakuierung des Aufnahmebereichs 32 der Einstelleinheit 22 ist. Zudem ist die Griffhülse 40 aus einem transparenten Material gebildet, wie beispielsweise aus einem transparenten gummiartigen Material. Zu einer Stabilisierung der Zusatzhandgriffvorrichtung 12 weist diese ein Stützelement 68 auf, das einstückig mit der Befestigungseinheit 56 ausgebildet ist. Das Stützelement 68 erstreckt sich von der Befestigungseinheit 56 entlang der axialen Richtung 62 durch den Aufnahmebereich 32 und ist mit der Wandung 60 an dem der Befestigungseinheit 56 abgewandten Endbereich 64 fest verbunden.

Eine Einstellung des Zusatzhandgriffs 54 bzw. der Kontur und/oder der Griffform des Zusatzhandgriffs 54 an die Hand des Bedieners und/oder eines Dämpfungsparameters der Dämpfungseinheit 24 erfolgt durch den Bediener vorzugsweise vor einer Inbetriebnahme der Handwerkzeugmaschine 14. Dabei nimmt der Bediener die Zusatzhandgriffvorrichtung 12 bzw. einen Griffbereich 70 des Zusatzhandgriffs 54 in die Hand und betätigt gleichzeitig die Einstellvorrichtung 18 bzw. die Pumpe 36. Es wird daraufhin der Zusatzhandgriff 54 bzw. der Aufnahmebereich 38 der Einstelleinheit 22 soweit evakuiert, bis die Kontur und/oder die Griffform des Zusatzhandgriffs 54 einen für die Hand des Bedieners erwünschten Umfang und/oder eine erwünschte Form annimmt und der Bediener die Pumpe 36 ausschaltet. Ferner kann neben einer Kontur und/oder einer Griffform des Zusatzhandgriffs 54 auch ein Dämpfungsparameter der Dämpfungseinheit 24 mittels der Einstellvorrichtung 18 von dem Bediener eingestellt werden. Hierbei wird unabhängig von der Kontur und/oder der Griffform des Zusatzhandgriffs 54 mittels der Pumpe 36 und des Ventils 20 solange Luft 72 aus dem Aufnahmebereich 38 evakuiert bzw. solange Luft 72 in den Aufnahmebereich 38 gepumpt, bis dieser eine gewünschte Dämpfungseigenschaft aufweist. Das Evakuieren des Aufnahmebereichs 38 bzw. Zuführen von Luft 72 in den Aufnahmebereich 38 ist von einem reversiblen Prozess gebildet, so dass eine Dämpfungseigenschaft und/oder eine Kontur und/oder Griffform des Zusatzhandgriffs 54 jederzeit von dem Bediener nach Bedarf geändert werden kann.

Eine Schwingungsdämpfung erfolgt innerhalb der Dämpfungseinheit 24 mittels der von Schaumstoff gebildeten Mittel 28, 30 und der Luft 72. Im Betrieb der Handwerkzeugmaschine 14 werden Schwingungen und/oder Vibrationen erzeugt, die die Befestigungseinheit 56 auf die Zusatzhandgriffvorrichtung 12 überträgt. Durch das Stützelement 68 werden die Schwingungen von der Befestigungseinheit 56 auf den Aufnahmebereich 38 bzw. auf die Dämpfungseinheit 24 übertragen. Innerhalb der Dämpfungseinheit 24 wird durch die aus Schaumstoff gebildeten Mittel 28, 30 eine Schwingungsenergie der von der Handwerkzeugmaschine 14 auf die Zusatzhandgriffvorrichtung 12 übertragenen Schwingungen absorbiert. Zudem wird mittels der Luft 72 bzw. einer Bewegung von Luftmolekülen, die sich zwischen den von Schaumstoff gebildeten Mitteln 28, 30 befinden, eine weitere Absorption von Schwingungsenergie bewirkt.

## Patentansprüche

1. Handgriffvorrichtung, insbesondere Zusatzhandgriffvorrichtung (12), insbesondere für eine Handwerkzeugmaschine (14), mit einem Handgriff (16) und einer Einstellvorrichtung (18), die ein Ventil (20) und eine Dämpfungseinheit (24) umfasst, wobei die Einstellvorrichtung (18) eine Einstelleinheit (22) aufweist, die zumindest teilweise von der Dämpfungseinheit (24) gebildet ist, wobei die Einstelleinheit (22), die zumindest teilweise zu einer Evakuierung vorgesehen ist, zumindest einen Aufnahmebereich (32) aufweist, der zu einer Evakuierung durch Entzug zumindest eines von einem Fluid gebildeten Dämpfungsmittels (34) der Dämpfungseinheit (24) vorgesehen ist, **gekennzeichnet durch** zumindest ein nicht-fluides Dämpfungsmittel (26), das aus zumindest zwei zueinander bewegbaren Mitteln (28, 30) gebildet ist.

2. Handgriffvorrichtung nach einem der vorhergehenden Ansprüche, **gekennzeichnet durch** zumindest ein Dämpfungsmittel (26), das von einem Schaumstoff gebildet ist.

3. Handgriffvorichtung zumindest nach Anspruch 1, **dadurch gekennzeichnet, dass** das von einem Fluid gebildete Dämpfungsmittel (34) von einem Gas gebildet ist.

4. Handgriffvorrichtung zumindest nach Anspruch 1, **dadurch gekennzeichnet, dass d**as von einem Fluid gebildete Dämpfungsmittel (34) von Luft (72) gebildet ist.

5. Handgriffvorrichtung nach einem der vorhergehenden Ansprüche, **dadurch gekennzeichnet, dass** die Einstellvorrichtung (18) eine Pumpe (36) aufweist, die zu einem Ansaugen und/oder einem Absaugen eines Dämpfungsmittels (34) vorgesehen ist.

6. Handgriffvorrichtung nach einem der vorhergehenden Ansprüche, **dadurch gekennzeichnet, dass** der Handgriff (16) eine Griffhülse (40) aufweist, die zumindest teilweise einen Aufnahmebereich (38) für die Einstellvorrichtung (18) bildet.

7. Handgriffvorrichtung zumindest nach Anspruch 6, **dadurch gekennzeichnet, dass** die Griffhülse (40) zumindest teilweise aus einem elastischen und/oder flexiblen Material gebildet ist.

8. Handgriffvorrichtung zumindest nach Anspruch 6, **dadurch gekennzeichnet, dass** die Griffhülse (40) zumindest teilweise aus einem transparenten Material gebildet ist.

9. Handwerkzeugmaschine, insbesondere Winkelschleifmaschine, mit einem Haupthandgriff (42) und einer Handgriffvorrichtung (10), insbesondere einer Zusatzhandgriffvorrichtung (12), nach einem der vorhergehenden Ansprüche.

## Claims

1. Handle device, in particular auxiliary handle device (12), in particular for a portable power tool (14), having a handle (16) and a setting device (18) which comprises a valve (20) and a damping unit (24), wherein the setting device (18) has a setting unit (22) which is formed at least partially by the damping unit (24), wherein the setting unit (22), which is provided at least partially for evacuation, has at least one receiving region (32) which is provided for evacuation by removal of at least one damping means (34), formed by a fluid, of the damping unit (24), **characterized by** at least one non-fluid damping means (26), which is formed from at least two means (28, 30) that are movable with respect to one another.

2. Handle device according to Claim 1, **characterized by** at least one damping means (26), which is formed by a foam.

3. Handle device at least according to Claim 1, **characterized in that** the damping means (34) formed by a fluid is formed by a gas.

4. Handle device at least according to Claim 1, **characterized in that** the damping means (34) formed by a fluid is formed by air (72).

5. Handle device according to one of the preceding claims, **characterized in that** the setting device (18) has a pump (36), which is provided for the intake and/or suction extraction of a damping means (34).

6. Handle device according to one of the preceding claims, **characterized in that** the handle (16) has a handle sleeve (40), which forms at least partially a receiving region (38) for the setting device (18).

7. Handle device at least according to Claim 6, **characterized in that** the handle sleeve (40) is formed at least partially from an elastic and/or flexible material.

8. Handle device at least according to Claim 6, **characterized in that** the handle sleeve (40) is formed at least partially from a transparent material.

9. Portable power tool, in particular an angle grinder, having a main handle (42) and a handle device (10), in particular an auxiliary handle device (12), according to one of the preceding claims.

## Revendications

1. Dispositif de poignée, en particulier dispositif de poignée auxiliaire (12), en particulier pour une machine-outil manuelle (14), comprenant une poignée (16) et un dispositif de réglage (18), qui comprend une soupape (20) et une unité d'amortissement (24), le dispositif de réglage (18) présentant une unité de réglage (22) qui est formée au moins en partie par l'unité d'amortissement (24), l'unité de réglage (22), qui est prévue au moins en partie pour une évacuation, présentant au moins une région de réception (32) qui est prévue pour une évacuation par extraction d'au moins un moyen amortisseur (34) constitué par un fluide de l'unité d'amortissement (24), **caractérisé par** au moins un moyen amortisseur non fluide (26), qui est constitué d'au moins deux moyens déplaçables l'un par rapport à l'autre (28, 30).

2. Dispositif de poignée selon la revendication 1, **caractérisé par** au moins un moyen amortisseur (26) qui est constitué par une mousse.

3. Dispositif de poignée selon au moins la revendication 1, **caractérisé en ce que** le moyen amortisseur (34) constitué par un fluide est constitué par un gaz.

4. Dispositif de poignée selon au moins la revendication 1, **caractérisé en ce que** le moyen amortisseur (34) constitué par un fluide est constitué par de l'air (72).

5. Dispositif de poignée selon l'une quelconque des revendications précédentes, **caractérisé en ce que** le dispositif de réglage (18) présente une pompe (36) qui est prévue pour aspirer un moyen amortisseur (34).

6. Dispositif de poignée selon l'une quelconque des revendications précédentes, **caractérisé en ce que** la poignée (16) présente un manchon de poignée (40) qui forme au moins en partie une région de réception (38) pour un dispositif de réglage (18).

7. Dispositif de poignée selon au moins la revendication 6, **caractérisé en ce que** le manchon de poignée (40) est constitué au moins en partie d'un matériau élastique et/ou flexible.

8. Dispositif de poignée selon au moins la revendication 6, **caractérisé en ce que** le manchon de poignée (40) est constitué au moins en partie d'un matériau transparent.

9. Machine-outil manuelle, notamment meuleuse d'angle, comprenant une poignée principale (42) et un dispositif de poignée (10), en particulier un dispositif de poignée auxiliaire (12), selon l'une quelconque des revendications précédentes.
